# EUROPÄISCHE PATENTSCHRIFT

(11) **EP 3 842 296 B1**
(45) Veröffentlichungstag und Bekanntmachung des Hinweises auf die Patenterteilung: **09.10.2024**
(21) Anmeldenummer: 21152910.2
(22) Anmeldetag: 24.08.2017
(51) Int. Cl.: B60R 21/203, B62D 7/22

(54) **SCHWINGUNGSTILGERRING SOWIE GASSACKMODUL MIT EINEM SOLCHEN SCHWINGUNGSTILGERRING**
VIBRATION ABSORBER RING AND AIRBAG MODULE WITH SUCH A VIBRATION ABSORBER RING
BAGUE D'AMORTISSEUR DE VIBRATIONS ET MODULE À COUSSIN GONFLABLE COMPRENANT UNE TELLE BAGUE D'AMORTISSEUR DE VIBRATIONS

(30) Priorität: 28.06.2017 DE 102017114301
(43) Veröffentlichungstag der Anmeldung: 30.06.2021
(62) Teilanmeldung aus: 17761216.5
(73) Patentinhaber: ZF Automotive Safety Germany GmbH, 63743 Aschaffenburg (DE)
(72) Erfinder: BACHMANN, Stefan, 63872 Heimbuchenthal (DE); RIBEIRO, Joao, 64832 Babenhausen (DE); TUMMINELLO, Marco, 63843 Niedernberg (DE); VON RODEN, Constantin, 63791 Karlstein (DE); MORHART, Johannes, 63762 Großostheim (DE); KESCHKE, Christian, 63500 Seligenstadt (DE); ECK, Gregor, 63931 Kirchzell (DE); SCHNEIDER, Sascha, 63743 Aschaffenburg (DE); BURGARD, Jürgen, 63768 Hösbach (DE)
(74) Vertreter: ZF Patentabteilung - DIPS

(56) Entgegenhaltungen:
- EP-A2- 1 020 332
- EP-B1- 1 020 332
- CN-U- 203 126 755
- DE-A1- 102007 049 234
- DE-B4- 102007 049 234
- DE-U1- 202006 016 948

## Beschreibung

Die Erfindung betrifft ein Gassackmodul zur Montage an einem Fahrzeuglenkrad, mit den Merkmalen im Oberbegriff des Anspruchs 1.

Bei vielen Fahrzeuglenkrädern treten im Leerlauf oder in bestimmten Geschwindigkeitsbereichen des Fahrzeugs Vibrationen auf, die vom Fahrer als störend empfunden werden. Diese Vibrationen sind unter anderem auf die starre Kopplung des Lenkrads mit der Lenksäule zurückzuführen.

Es ist bekannt, zur Vermeidung der unerwünschten Lenkradschwingungen sogenannte Schwingungstilger einzusetzen, um die Eigenfrequenz des Gesamtsystems so abzustimmen, dass sie in einem unkritischen Bereich liegt. Derzeit wird als gegenschwingende Tilgermasse beispielsweise der Gasgenerator eines im Lenkrad angeordneten Gassackmoduls eingesetzt.

Der Gasgenerator kann in diesem Fall mittels eines Schwingungstilgerrings schwingfähig entweder direkt oder über einen Modulträger des Gassackmoduls indirekt am Fahrzeuglenkrad befestigt werden. Ein solcher Schwingungstilgerring ist zum Beispiel in der CN 103 192 788 A gezeigt.

Im Fahrbetrieb auftretende, unerwünschte Lenkradvibrationen werden dadurch in vorteilhafter Weise minimiert. Allerdings weist das Gassackmodul bei der Verwendung eines Schwingungstilgerrings gemäß der CN 103 192 788 A einen unerwünscht großen Bauraumbedarf auf.

Die gattungsgemäße DE 10 2007 049 234 A1 offenbart ein Gassackmodul mit den Merkmalen im Oberbegriff des Anspruchs 1, wobei ebenfalls ein ringförmiger Schwingungstilger zum Dämpfen von Schwingungen vorgesehen ist.

Aufgabe der Erfindung ist die Schaffung eines kompakten Gassackmoduls, das einen schwingfähig gelagerten Gasgenerator sowie einen Schwingungstilgerring zur schwingfähigen Befestigung des Gasgenerators an einem Fahrzeuglenkrad aufweist, wobei der Gassackmund eines Gassacks besonders fest und zuverlässig am Gassackmodul fixiert ist.

Erfindungsgemäß wird diese Aufgabe gelöst durch ein Gassackmodul mit den Merkmalen des Anspruchs 1, bei dem der Trägerabschnitt eine Klemmfläche für einen Gassack aufweist und der Schwingungstilgerring ein Zweikomponenten-Bauteil ist, mit einer elastischen ersten Komponente, die das Dämpfungsglied bildet, sowie einer zweiten Komponente, die eine geringere Elastizität aufweist als die erste Komponente, wobei die Klemmfläche des Trägerabschnitts durch die erste Komponente gebildet wird und/oder genoppt ist.

Insbesondere können das Dämpfungsglied und die Klemmfläche einstückig ineinander übergehen. Folglich lässt sich mit minimalem fertigungstechnischen Aufwand bei der Herstellung des Dämpfungsglieds gleichzeitig auch der Reibwert der Klemmfläche zum Gassack erhöhen und damit die Klemmung im Bereich des Gassackmunds verbessern.

Bevorzugt sind der Trägerabschnitt und der Tilgerabschnitt in axialer Richtung voneinander beabstandet. Insbesondere ist dabei der Trägerabschnitt des Schwingungstilgerrings axial näher am freien Ende des elastischen Dämpfungsglieds angeordnet als der Tilgerabschnitt des Schwingungstilgerrings. Auf diese Weise lässt sich im Bereich des Tilgerabschnitts die zur Schwingungstilgung notwendige axiale Höhe des Dämpfungsglieds realisieren, wohingegen der benachbarte Trägerabschnitt axial "abgesenkt" ist und dadurch zusätzlichen Stauraum für das angrenzende, gefaltete Gassackpaket freigibt. Das Gassackmodul mit schwingfähig gelagertem Gasgenerator weist folglich gegenüber dem Stand der Technik einen verringerten Bauraumbedarf auf und baut im Idealfall annähernd so kompakt wie ein Gassackmodul ohne Schwingungstilger.

In einer Ausführungsform des Gassackmoduls sind mehrere, insbesondere in Umfangsrichtung des Schwingungstilgerrings abwechselnd angeordnete, Trägerabschnitte und Tilgerabschnitte vorgesehen. Somit ergibt sich mit Bezug auf die Ringachse A in Umfangsrichtung ein wellenförmiger Verlauf des Schwingungstilgerrings. Beispielsweise sind jeweils drei oder vier Trägerabschnitte und Tilgerabschnitte vorhanden.

Das elastische Dämpfungsglied kann zwischen dem Tilgerabschnitt und dem Befestigungselement für den Gasgenerator in axialer Richtung zumindest abschnittsweise einen Hohlquerschnitt aufweisen. Auf diese Weise lässt sich über eine einfache Anpassung des Dämpfungsgliedquerschnitts mit geringem Aufwand ein gewünschter Frequenzbereich für den Schwingungstilger einstellen.

Der Trägerabschnitt des Schwingungstilgerrings weist bevorzugt eine Befestigungseinrichtung, insbesondere eine Befestigungsöffnung zur Aufnahme eines Verbindungsmittels auf. Mögliche Verbindungsmittel sind beispielsweise Crimp-Laschen eines Gassackhalteblechs oder Schraubbolzen, die den Schwingungstilgerring an einem Gassackhalteblech und/oder an einem Generatorträger fixieren.

Gemäß einer weiteren Ausführungsform des Gassackmoduls weist der Trägerabschnitt eine Klemmfläche für einen Gassack auf, wobei sich diese Klemmfläche insbesondere im Wesentlichen senkrecht zur Ringachse erstreckt.

Der Schwingungstilgerring ist erfindungsgemäß ein Zweikomponenten-Bauteil, insbesondere ein Zweikomponenten-Spritzgussteil, mit einer elastischen ersten Komponente, die das Dämpfungsglied bildet, sowie einer zweiten Komponente, die eine geringere Elastizität aufweist als die erste Komponente. Die erste Komponente ist bevorzugt ein elastisches Kunststoffmaterial, insbesondere ein Elastomer wie zum Beispiel Gummi, wohingegen die zweite Komponente bevorzugt ein vergleichsweise festes Kunststoffmaterial oder ein Metall wie zum Beispiel Stahl ist.

Die elastische erste Komponente des Schwingungstilgerrings bildet vorzugsweise die Klemmfläche des Trägerabschnitts für einen Gassack. Zwischen dem beispielsweise aus Gewebe hergestellten Gassack und der Klemmfläche stellt sich bei einer Klemmfläche aus elastischem Material ein höherer Reibwert ein als bei einer Klemmfläche aus einem harten Material. Folglich ergibt sich in vorteilhafter Weise für eine aus der ersten Komponente gebildeten Klemmfläche bei gleicher (axialer) Klemmkraft eine stärkere Haftung des Gassacks am Schwingungstilgerring. Um die Haftung weiter zu verstärken ist im Übrigen auch denkbar, die an den Gassack angrenzende Klemmfläche zu strukturieren, also beispielsweise aufzurauen, zu noppen oder ähnliches. Die gegenüber einer glatten Klemmfläche erhöhte Gassackhaftung einer strukturierten Klemmfläche stellt sich im Übrigen auch ein, wenn die Klemmfläche aus der zweiten Komponente gebildet ist.

Gemäß einer weiteren Ausführungsform ist auf einer vom Dämpfungsglied abgewandten axialen Stirnseite, an einem radialen Innenrand des Schwingungstilgerrings eine Fase zur Umlenkung eines radialen Gasstroms vorgesehen. Durch diese Gasumlenkung lässt sich die Befüllung des Gassacks beschleunigen und eine unerwünschte Gasleckage minimieren.

Ferner kann ein Stützglied vorgesehen sein, welches sich in axialer Richtung vom Tilgerabschnitt und/oder vom Trägerabschnitt zu einem freien Stützgliedende hin erstreckt. Dabei sind das elastische Dämpfungsglied und das Stützglied insbesondere auf derselben axialen Seite des Schwingungstilgerrings angeordnet. Das Stützglied ist vorzugsweise aus dem Material der zweiten Komponente des Schwingungstilgerrings gebildet und beispielsweise einstückig an den Trägerabschnitt angeformt.

Erfindungsgemäß erstreckt sich das elastische Dämpfungsglied im montierten Zustand des Gassackmoduls vom Tilgerabschnitt axial in Richtung zu einer Lenkradnabe des Fahrzeuglenkrads. Folglich ist der Gasgenerator ist im eingebauten Zustand des Gassackmoduls hängend am Schwingungstilgerring gelagert. Mit anderen Worten ist der Gasgenerator so gelagert, dass das Dämpfungsglied im eingebauten Zustand des Gassackmoduls in axialer Richtung auf Zug belastet wird. Bei einer Auslösung des Gasgenerators wird das Dämpfungsglied durch den Gasdruck zusätzlich auf Zug belastet und verformt. Der Gasgenerator bewegt sich dabei in axialer Richtung und stützt sich schließlich an einem Modulbauteil, beispielsweise einem Generatorträger des Gassackmoduls ab. Diese axiale Bewegung des Gasgenerators wird auch als "Setzen" des Gasgenerators bezeichnet, was zu einer Abdichtung des Gassackmoduls und damit zu einer verringerten Gasleckage führt. Es hat sich herausgestellt, dass sich bei einem auf Schwingungstilgung ausgelegten Dämpfungsglied eine bessere Modulabdichtung ergibt, wenn das Dämpfungsglied bei einer Auslösung des Gasgenerators nicht auf Druck, sondern auf Zug beansprucht wird.

In einer bevorzugten Ausführungsform des Gassackmoduls weist der Trägerabschnitt des Schwingungstilgerrings im montierten Zustand des Gassackmoduls einen geringeren axialen Abstand zur Lenkradnabe auf als der Tilgerabschnitt des Schwingungstilgerrings. Auf diese Weise entsteht im Bereich des Trägerabschnitts zusätzlicher Stauraum für den angrenzenden, gefalteten Gassack. Durch diesen zusätzlichen Stauraum lässt sich ein besonders kompaktes Gassackmodul realisieren.

Gemäß der Erfindung ist im montierten Zustand des Gassackmoduls im Bereich des Tilgerabschnitts radial außerhalb des Dämpfungsglieds ein Wandabschnitt zur Minimierung einer Gasleckage vorgesehen. Durch diesen Wandabschnitt lässt sich bei einer Aktivierung des Gasgenerators ein unerwünschtes Abströmen von Generatorgas nach außerhalb des Gassackmoduls verhindern oder zumindest reduzieren.

Vorzugsweise ist ein Generatorträger vorgesehen, wobei der Wandabschnitt am Generatorträger befestigt ist und sich in axialer Richtung vom Generatorträger bis zum Trägerabschnitt des Schwingungstilgerrings erstreckt. Insbesondere ist der Wandabschnitt aus einem Kunststoff hergestellt und an den Generatorträger angespritzt, sodass sich die Gasleckage auf diese Weise mit besonders geringem Fertigungs- und Montageaufwand reduzieren lässt.

Besonders bevorzugt grenzt der Wandabschnitt in Umfangsrichtung jeweils an einen Trägerabschnitt des Schwingungstilgerrings an, wobei der Trägerabschnitt radial innerhalb und/oder radial außerhalb des Wandabschnitts in Umfangsrichtung mit dem Wandabschnitt überlappt, sodass zwischen dem Schwingungstilgerring und dem Wandabschnitt eine Labyrinth-Abdichtung entsteht. Mit anderen Worten ist zwischen dem Trägerabschnitt des Schwingungstilgerrings und dem Wandabschnitt kein radial durchgängiger Spalt vorgesehen, sodass eine Gasströmung zumindest einmal die Richtung wechseln muss. Dies führt bei einer Aktivierung des Gasgenerators im Spaltbereich zu einem besonders geringen Gasverlust.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine perspektivische Ansicht eines erfindungsgemäßen Schwingungstilgerrings gemäß einer Ausführungsform;
- Figur 2 eine Seitenansicht des Schwingungstilgerrings gemäß Figur 1;
- Figur 3 eine perspektivische Draufsicht eines erfindungsgemäßen Gassackmoduls mit einem Schwingungstilgerring gemäß Figur 1 und einem eingeknüpften Gasgenerator;
- Figur 4 eine perspektivische Untersicht eines erfindungsgemäßen Gassackmoduls mit einem Schwingungstilgerring gemäß Figur 1 und einem eingeknüpften Gasgenerator;
- Figur 5 eine perspektivische Untersicht eines erfindungsgemäßen Gassackmoduls mit einem Gassackhalteblech und einem daran befestigten Schwingungstilgerring gemäß Figur 1;
- Figur 6 eine perspektivische Draufsicht des Gassackmoduls gemäß Figur 5;
- Figur 7 einen Schnitt durch das Gassackmodul gemäß Figur 5;
- Figur 8 einen weiteren Schnitt durch das Gassackmodul gemäß Figur 5;
- Figur 9 eine perspektivische Untersicht des Gassackmoduls gemäß Figur 5 mit einem zusätzlich vorgesehenen gefalteten Gassack und einer Modulabdeckung;
- Figur 10 einen Schnitt durch das Gassackmodul gemäß Figur 9 mit einem zusätzlich vorgesehenen Generatorträger;
- Figur 11 ein Schnittdetail des Gassackmoduls gemäß Figur 9 im Bereich des Schwingungstilgerrings;
- Figur 12 eine perspektivische Draufsicht eines erfindungsgemäßen Gassackmoduls mit einem erfindungsgemäßen Schwingungstilgerring gemäß einer alternativen Ausführungsform und einem eingeknüpften Gasgenerator;
- Figur 13 eine perspektivische Draufsicht des Gassackmoduls gemäß Figur 12 mit einem zusätzlich vorgesehenen Gassackhalteblech;
- Figur 14 eine perspektivische Draufsicht des Gassackmoduls gemäß Figur 13 mit einem zusätzlich vorgesehenen Generatorträger;
- Figur 15 einen Schnitt durch das Gassackmodul gemäß Figur 14 mit einem zusätzlich vorgesehenen gefalteten Gassack und einer Modulabdeckung;
- Figur 16 ein Schnittdetail des Gassackmoduls aus Figur 15 im Bereich eines Trägerabschnitts des Schwingungstilgerrings;
- Figur 17 ein Schnittdetail des Gassackmoduls aus Figur 15 im Bereich eines Tilgerabschnitts des Schwingungstilgerrings;
- Figur 18 eine perspektivische Ansicht eines erfindungsgemäßen Gassackmoduls mit einem erfindungsgemäßen Schwingungstilgerring gemäß einer alternativen Ausführungsform und einem eingeknüpften Gasgenerator;
- Figur 19 ein Schnittdetail des Gassackmoduls aus Figur 18 im Bereich eines Stützglieds des Schwingungstilgerrings;
- Figur 20 einen Detailausschnitt eines erfindungsgemäßen Gassackmoduls im Bereich eines Tilgerabschnitts gemäß einer Ausführungsform;
- Figur 21 einen Detailausschnitt eines erfindungsgemäßen Gassackmoduls im Bereich eines Tilgerabschnitts gemäß einer weiteren Ausführungsform;
- Figur 22 einen Schnitt durch einen Tilgerabschnitt des Gassackmoduls gemäß Figur 21 im montierten Zustand;
- Figur 23 eine Draufsicht auf das Gassackmodul gemäß Figur 21;
- Figur 24 einen Detailschnitt I-I gemäß Figur 23; und
- Figur 25 eine teilgeschnittene perspektivische Ansicht des Gassackmoduls gemäß den Figuren 21 bis 24.

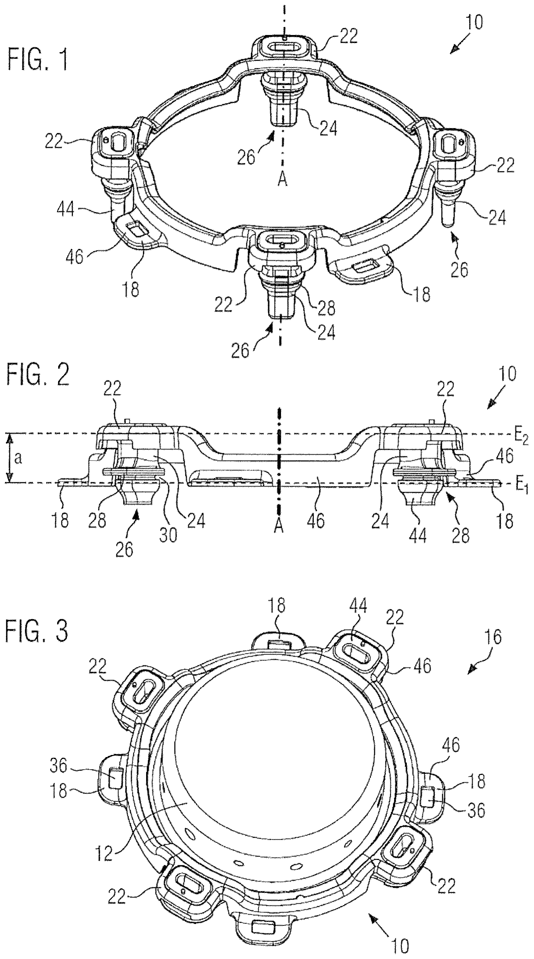

Die Figuren 1 bis 11 zeigen eine Ausführungsform eines Schwingungstilgerrings 10 zur schwingfähigen Befestigung eines Gasgenerators 12 an einem Fahrzeuglenkrad 14 sowie ein Gassackmodul 16 mit einem solchen Schwingungstilgerring 10.

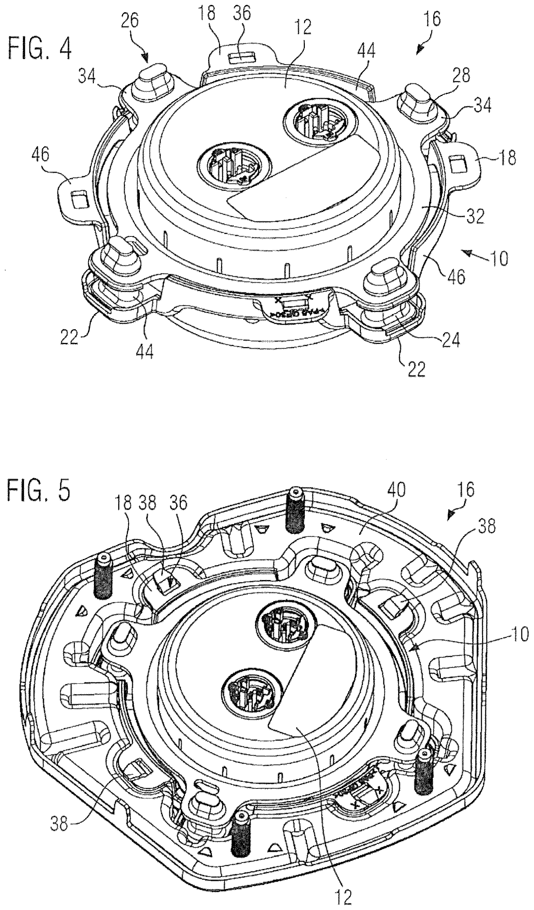

Der Schwingungstilgerring 10 umfasst gemäß den Figuren 1 und 2 eine Ringachse A, einen Trägerabschnitt 18 zur Befestigung des Schwingungstilgerrings 10 an einem lenkradfesten Halteelement (siehe auch Figur 5), einen Tilgerabschnitt 22 zur Befestigung des Gasgenerators 12 am Schwingungstilgerring 10 (siehe auch Figur 4), wobei ein elastisches Dämpfungsglied 24 vorgesehen ist, das sich mit Bezug auf die Ringachse A in axialer Richtung vom Tilgerabschnitt 22 zu einem freien Ende 26 hin erstreckt und zwischen dem Tilgerabschnitt 22 und dem freien Ende 26 ein Befestigungselement 28 für den Gasgenerator 12 aufweist. Das lenkradfeste Halteelement für den Schwingungstilgerring 10 ist dabei insbesondere ein Gassackhalteblech 40 oder ein Generatorträger 42 des am Fahrzeuglenkrad 14 befestigbaren Gassackmoduls 16. Alternativ ist auch denkbar, dass das Halteelement eine zwischen dem Fahrzeuglenkrad 14 und dem Gassackmodul 16 angeordnete, am Fahrzeuglenkrad 14 befestigbare Zwischenplatte ist.

Der Schwingungstilgerring 10 ist bevorzugt ein umfangsmäßig geschlossener, insbesondere kreisrunder Ring, durch dessen Zentrum oder Mittelpunkt die Ringachse A verläuft, wobei sich die Ringachse A im eingebauten Zustand des Gassackmoduls 16 parallel zu einer Lenkradachse des Fahrzeuglenkrads 14 erstreckt und insbesondere mit dieser identisch ist.

Der Schwingungstilgerring 10 weist insbesondere mehrere in Umfangsrichtung abwechselnd angeordnete Trägerabschnitte 18 und Tilgerabschnitte 22 auf, wobei im dargestellten Ausführungsbeispiel jeweils vier Trägerabschnitte 18 und Tilgerabschnitte 22 vorgesehen sind. Somit ergibt sich in Umfangsrichtung ein wellenartiger Verlauf des Schwingungstilgerrings mit Wellenbergen im Bereich der Tilgerabschnitte 22 und Wellentälern im Bereich der Trägerabschnitte 18.

Das Befestigungselement 28 ist im vorliegenden Ausführungsbeispiel einstückig an das Dämpfungsglied 24 angeformt und als Dämpfungsgliedabschnitt mit verdicktem Außenquerschnitt und einer umlaufenden Nut 30 ausgebildet (Figur 2). Der Gasgenerator 12 weist einen Generatorflansch 32 mit radialen Flanschfortsätzen 34 auf, in denen jeweils eine Öffnung zum Einknüpfen des Befestigungselements 28 vorgesehen ist. Die freien Enden 26 der Dämpfungsglieder 24 werden axial in diese Öffnungen eingeführt, bis ein Öffnungsrand unter Verformung des jeweiligen elastischen Dämpfungsglieds 24 im Bereich des verdickten Außenquerschnitts in die Nut 30 einschnappt und den Gasgenerator 12 schwingfähig am Schwingungstilgerring 10 befestigt (Figur 4).

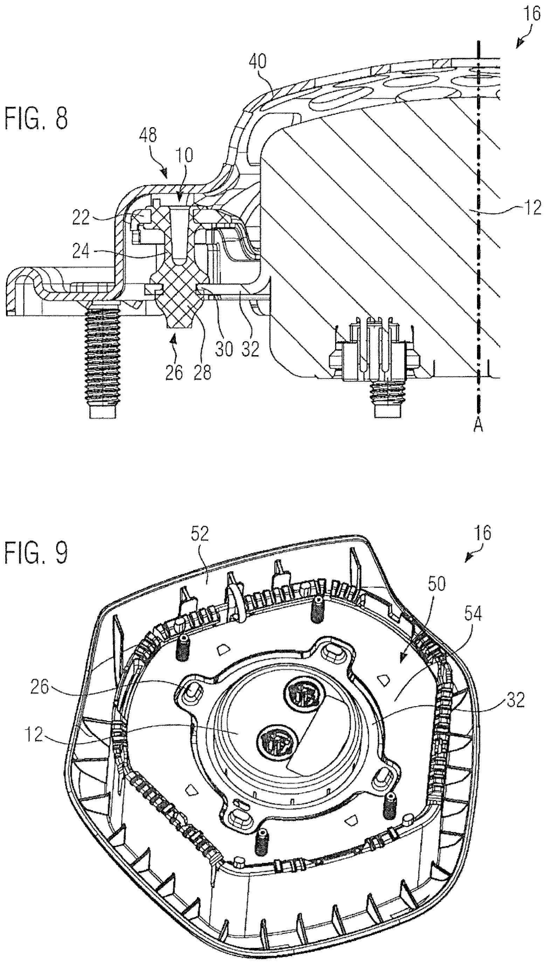

Anhand der Figur 3 wird deutlich, dass das elastische Dämpfungsglied 24 zwischen dem Tilgerabschnitt 22 und dem Befestigungselement 28 für den Gasgenerator 12 in axialer Richtung zumindest abschnittsweise einen Hohlquerschnitt aufweist (siehe auch Figur 8). Über eine Anpassung des Dämpfungsgliedquerschnitts, insbesondere einer Wandstärke des Dämpfungsglied-Hohlquerschnitts zwischen dem Tilgerabschnitt 22 und dem Befestigungselement 28 lässt sich mit geringem Aufwand ein gewünschter Frequenzbereich für den Schwingungstilger einstellen.

Um eine besonders kompakte Bauweise des Gassackmoduls 16 zu realisieren, sind der Trägerabschnitt 18 und der Tilgerabschnitt 22 gemäß Figur 2 in axialer Richtung voneinander beabstandet, wobei ein axialer Abstand a vorzugsweise wenigstens 3 mm, insbesondere wenigstens 5 mm beträgt. Insbesondere erstrecken sich alle Trägerabschnitte 18 in einer zur Ringachse A senkrechten Ebene E₁ und die Tilgerabschnitte 22 in einer zur Ringachse A senkrechten Ebene E₂, wobei die parallelen Ebenen E₁ und E₂ einen Abstand a aufweisen.

Der Trägerabschnitt 18 des Schwingungstilgerrings 10 weist eine Befestigungsöffnung 36 zur Aufnahme eines Verbindungsmittels 38 auf, um den Schwingungstilgerring 10 fest an einem Gassackhalteblech 40 und/oder an einem Generatorträger 42 zu fixieren. Über diese Befestigung am Gassackhalteblech 40 und/oder am Generatorträger 42 sowie deren lenkradfeste Montage ist der Schwingungstilgerring 10 letztlich fest und unverschieblich mit dem Fahrzeuglenkrad 14 verbunden.

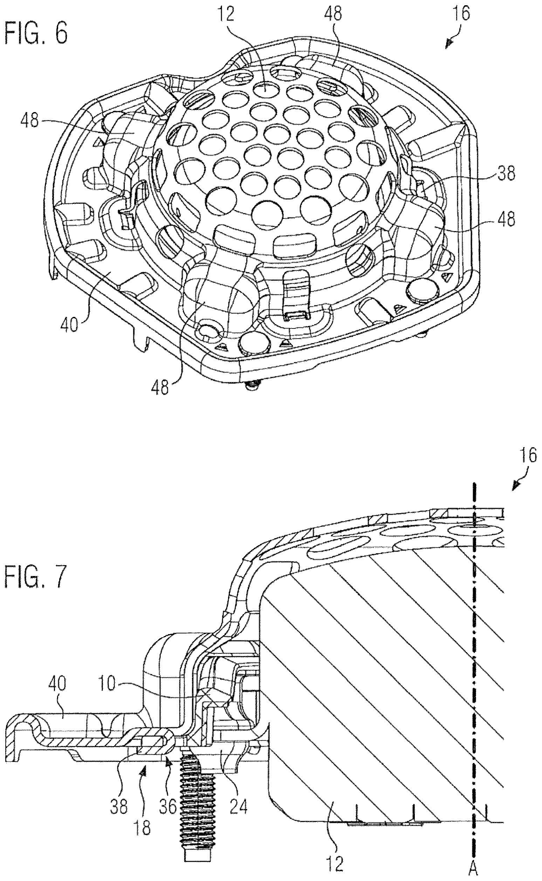

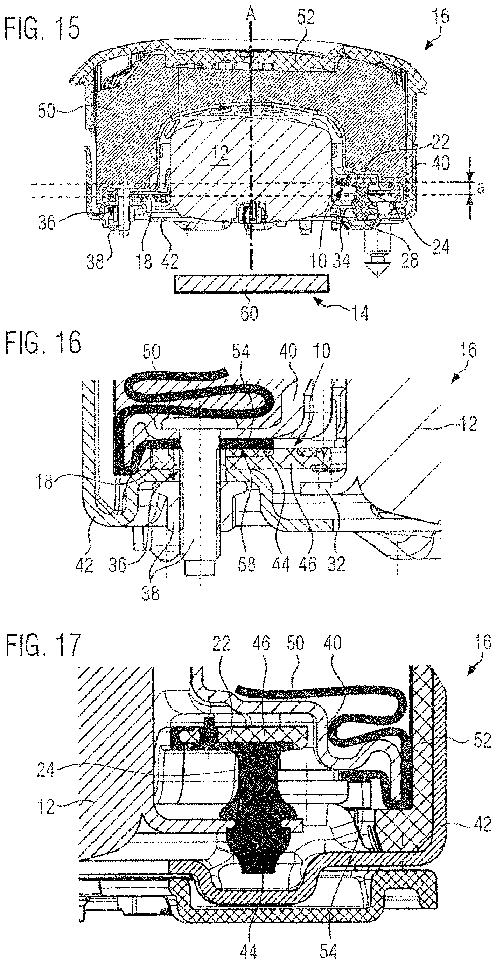

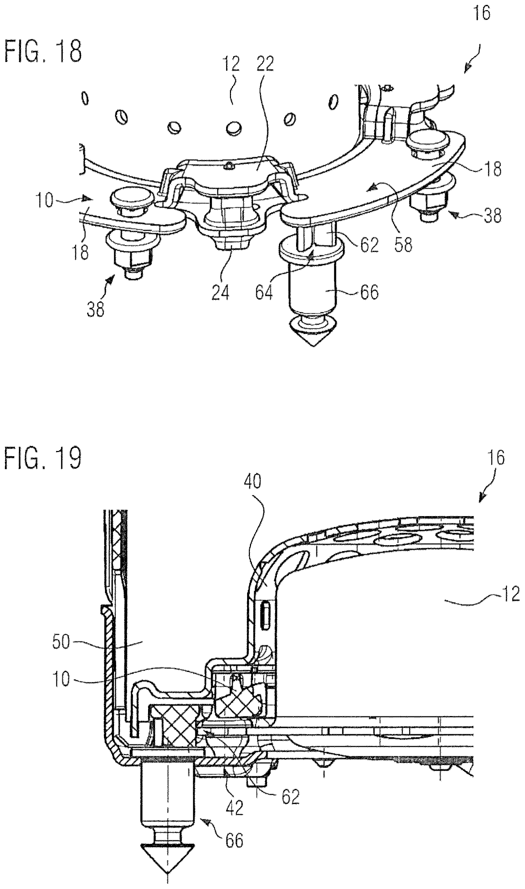

Mögliche Verbindungsmittel 38 zur Befestigung des Schwingungstilgerrings 10 am Trägerabschnitt 18 sind beispielsweise am Gassackhalteblech 40 angeformte Crimp-Laschen (siehe Figuren 5 und 7) oder Schraubbolzen (siehe Figuren 16 und 18).

Der Schwingungstilgerring 10 ist ein Zweikomponenten-Bauteil mit einer elastischen ersten Komponente 44, aus der das Dämpfungsglied 24 des Schwingungstilgerrings 10 geformt ist, sowie einer zweiten Komponente 46, die eine geringere Elastizität aufweist als die erste Komponente 44.

Die erste Komponente 44 ist bevorzugt ein elastisches Kunststoffmaterial, insbesondere ein Elastomer wie zum Beispiel Gummi oder Silikon, wohingegen die zweite Komponente 46 bevorzugt ein vergleichsweise festes/starres Kunststoffmaterial, insbesondere ein Thermoplast, oder ein Metall wie zum Beispiel Stahl ist. Aus Fertigungs- und Kostengründen ist der Schwingungstilgerring 10 besonders bevorzugt ein Zweikomponenten-Spritzgussteil aus zwei Kunststoffkomponenten.

Wie bereits oben erwähnt zeigen die Figuren 3 und 4 die schwingfähige Befestigung des Gasgenerators 12 am Tilgerabschnitt 22 des Schwingungstilgerrings 10, während in Figur 5 die feste Verbindung des Gassackhalteblechs 40 am Trägerabschnitt 18 des Schwingungstilgerrings 10 dargestellt ist.

Anhand der Figur 6 wird deutlich, dass das Gassackhalteblech 40 im vorliegenden Ausführungsbeispiel als Diffusorkäfig ausgebildet ist, der den Gasgenerator 12 umgibt.

Die Figur 7 zeigt einen Schnitt durch das Gassackmodul 16 gemäß Figur 6 im Bereich einer Befestigungsöffnung 36 des Trägerabschnitts 18. Dabei greift das Verbindungsmittel 38, hier konkret eine am Gassackhalteblech 40 angeformte Crimp-Lasche, in die Befestigungsöffnung 36 ein, um den Schwingungstilgerring 10 fest mit dem Gassackhalteblech 40 zu verbinden.

Die Figur 8 zeigt einen Schnitt durch das Gassackmodul 16 gemäß Figur 6 im Bereich eines Dämpfungsglieds 24. Im Vergleich mit Figur 7 fällt auf, dass der Schwingungstilgerring 10 aufgrund des Dämpfungsglieds 24 in diesem Bereich einen erhöhten Bauraumbedarf aufweist, was sich auch an entsprechenden Ausbuchtungen 48 des als Diffusorkäfig ausgebildeten Gassackhalteblechs 40 in Figur 6 zeigt.

Durch die besondere Konstruktion des Schwingungstilgerrings 10 mit einem axialen Versatz zwischen den Trägerabschnitten 18 und den Tilgerabschnitten 22 wird dieser erhöhte Bauraumbedarf jedoch auf ein Minimum begrenzt. So entsteht gemäß Figur 6 in Umfangsrichtung zwischen den Ausbuchtungen 48 ein Raum, der insbesondere als Stauraum für einen von außerhalb an den Diffusorkäfig angrenzenden, gefalteten Gassack 50 genutzt werden kann.

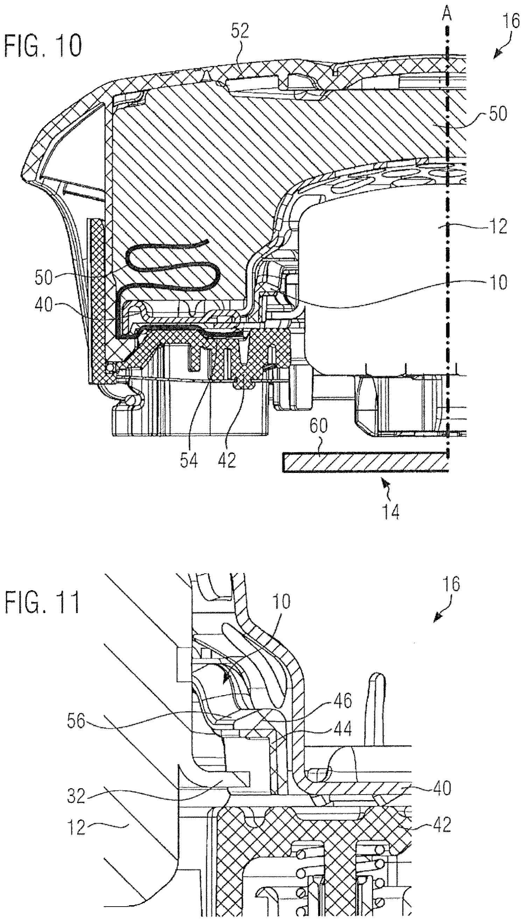

Die Figuren 9 und 10 zeigen das Gassackmodul 16 mit dem gefalteten Gassack 50, der den Diffusorkäfig umgibt und zusammen mit dem Diffusorkäfig in einer Modulabdeckung 52 aufgenommen ist. Zum Aufblasen des Gassacks 50 erstreckt sich der Gasgenerator 12 durch einen Gassackmund 54 ins Innere des Gassacks 50, wobei der Gassackmund 54 gemäß Figur 10 zwischen dem Gassackhalteblech 40 und dem Generatorträger 42 geklemmt ist.

In Figur 11 ist ein Schnittdetail des Gassackmoduls 16 im Bereich des Schwingungstilgerrings 10 dargestellt. Dabei wird deutlich, dass auf einer vom Dämpfungsglied 24 abgewandten axialen Stirnseite an einem radialen Innenrand des Schwingungstilgerrings 10 eine Fase 56 zur Umlenkung eines radialen Gasstroms vorgesehen ist (gemäß Figur 11 nach oben). Aufgrund dieser Gasumlenkung in Richtung zum Inneren des Gassacks 50 wird eine unerwünschte Gasleckage bei der Aktivierung des Gasgenerators 16 reduziert.

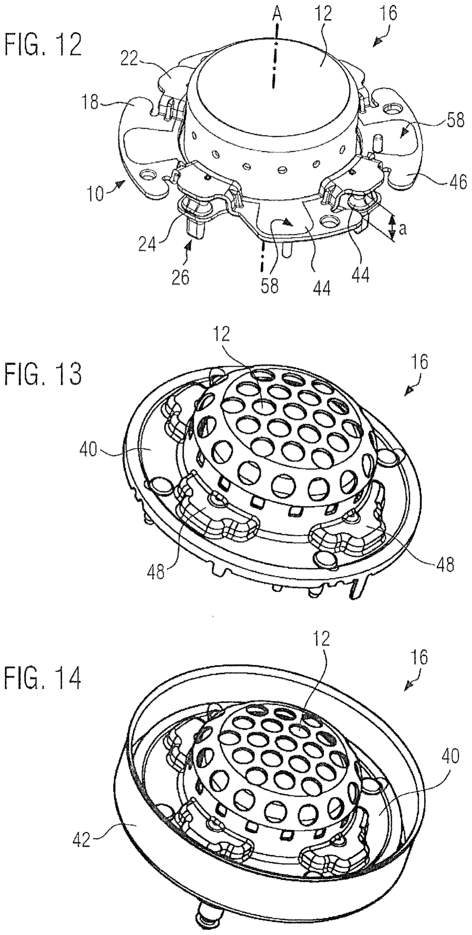

Die Figuren 12 bis 17 zeigen eine weitere Ausführungsform des Schwingungstilgerrings 10 zur schwingfähigen Befestigung eines Gasgenerators 12 an einem Fahrzeuglenkrad 14 sowie ein Gassackmodul 16 mit einem solchen Schwingungstilgerring 10.

Der dargestellte Schwingungstilgerring 10 entspricht dabei weitgehend der Ausführungsform gemäß den Figuren 1 bis 11, sodass generell auf die obigen Ausführungen verwiesen und im Folgenden hauptsächlich auf Unterschiede eingegangen wird.

Analog zu Figur 3 ist in Figur 12 ein Schwingungstilgerring 10 mit daran befestigtem Gasgenerator 12 dargestellt, wobei sich der Schwingungstilgerring 10 gemäß Figur 12 im Wesentlichen dadurch von der Ausführungsform gemäß Figur 3 unterscheidet, dass der Trägerabschnitt 18 eine Klemmfläche 58 für den Gassack 50 aufweist, wobei sich die Klemmfläche 58 im Wesentlichen senkrecht zur Ringachse A erstreckt.

Wie oben beschrieben, ist der Schwingungstilgerring 10 ein Zweikomponenten-Bauteil mit einer elastischen ersten Komponente 44, aus der das Dämpfungsglied 24 des Schwingungstilgerrings 10 geformt ist, sowie einer zweiten Komponente 46, die eine geringere Elastizität aufweist als die erste Komponente 44.

Eine weitere Besonderheit des in den Figuren 12 bis 17 dargestellten Schwingungstilgerrings 10 besteht nun darin, dass die elastische erste Komponente 44 des Schwingungstilgerrings 10 auch die Klemmfläche 58 des Trägerabschnitts 18 bildet. Dadurch ergeben sich zwischen dem Gewebe des Gassacks 50 und der Klemmfläche 58 ein besonders hoher Reibwert und damit eine besonders zuverlässige lenkradseitige Befestigung des Gassackmunds 54 bei einer Auslösung des Gasgenerators 12.

Die Idee, eine Klemmung des Gassackmunds 54 am Schwingungstilgerring 10 zu verbessern, indem die Klemmfläche 58 des Trägerabschnitts 18 durch die elastische erste Komponente 44 des als Zweikomponenten-Bauteil gefertigten Schwingungstilgerrings 10 gebildet wird, ist dabei bereits für sich genommen erfinderisch, unabhängig von einem axialen Abstand zwischen dem Trägerabschnitt 18 und dem Tilgerabschnitt 22.

Ausgehend von Figur 12 ist in Figur 13 zusätzlich das als Diffusorkäfig ausgebildete Gassackhalteblech 40 und in Figur 14 ferner noch der Generatorträger 42 vorgesehen.

Die Figur 15 zeigt einen Schnitt durch das Gassackmodul 16 gemäß Figur 14, wobei außerdem noch der gefaltete Gassack 50 sowie die Modulabdeckung 52 dargestellt sind und im Übrigen auch eine Lenkradnabe 60 des Fahrzeuglenkrads 14 schematisch angedeutet ist.

Das elastische Dämpfungsglied 24 des Schwingungstilgerrings 10 erstreckt sich dabei im montierten Zustand des Gassackmoduls 16 vom Tilgerabschnitt 22 axial in Richtung zur Lenkradnabe 60 des Fahrzeuglenkrads 14, sodass der Gasgenerator 12 mit anderen Worten hängend im Gassackmodul 16 eingebaut ist.

Ferner weist der Trägerabschnitt 18 im montierten Zustand des Gassackmoduls 16 einen geringeren axialen Abstand zur Lenkradnabe 60 auf als der Tilgerabschnitt 22 des Schwingungstilgerrings 10. Dies führt zu einer besonders kompakten Bauweise des Gassackmoduls 16.

Die Figuren 16 und 17 zeigen Details der Figur 15 im Bereich eines Trägerabschnitts 18 bzw. eines Tilgerabschnitts 22 des Schwingungstilgerrings 10.

Anhand der Figur 16 wird deutlich, dass der Gassackmund 54 des Gassacks 50 im Bereich des Trägerabschnitts 18 zwischen dem Schwingungstilgerring 10 und dem Gassackhalteblech 40 geklemmt ist, wobei die Klemmfläche 58 des Trägerabschnitts 18 von der elastischen ersten Komponente 44 des Schwingungstilgerrings 10 gebildet ist. Die Klemmkraft wird in diesem Fall aufgebracht durch das als Schraubbolzen und Mutter ausgeführte Verbindungsmittel 38, welches den Generatorträger 42, den Trägerabschnitt 18 des Schwingungstilgerrings 10, den Gassack 50 und das Gassackhalteblech 40 axial zusammenpresst.

Im dargestellten Ausführungsbeispiel ist der Gassackmund 54 im Bereich des Tilgerabschnitts 22 gemäß Figur 17 hingegen ausgespart, sodass der Gassack 50 hier nicht zwischen dem Schwingungstilgerring 10 und dem Gassackhalteblech geklemmt ist.

Die Figuren 18 und 19 zeigen schließlich noch eine weitere Ausführungsform des Schwingungstilgerrings 10 zur schwingfähigen Befestigung eines Gasgenerators 12 an einem Fahrzeuglenkrad 14 sowie ein Gassackmodul 16 mit einem solchen Schwingungstilgerring 10.

Die hier dargestellte Ausführungsform des Schwingungstilgerrings 10 unterscheidet sich im Wesentlichen dadurch vom Schwingungstilgerring 10 gemäß den Figuren 12 bis 17, dass wenigstens ein Stützglied 62 vorgesehen ist, welches sich in axialer Richtung vom Trägerabschnitt 18 zu einem freien Stützgliedende 64 hin erstreckt, wobei das elastische Dämpfungsglied 24 und das Stützglied 62 auf derselben axialen Seite des Schwingungstilgerrings 10 angeordnet sind.

Das Stützglied 62 ist im vorliegenden Ausführungsbeispiel einstückig an den Trägerabschnitt 18 angeformt und aus der im Wesentlichen starren zweiten Komponente 46 des als Zweikomponenten-Bauteil ausgeführten Schwingungstilgerrings 10 gebildet.

Bei einer Auslösung des Gassackmoduls 16 wird der Gasgenerator 12 durch den Gasdruck axial in Richtung zur Lenkradnabe 60 beaufschlagt. Über die Befestigung des Gasgenerators 12 an den Dämpfungsgliedern 24 wird dabei auch der Schwingungstilgerring 10 durch eine Axialkraft in Richtung zur Lenkradnabe 60 beaufschlagt. Sofern die Trägerabschnitte 18 nicht vollflächig aufliegen (beispielsweise auf dem Generatorträger 42), kann diese Axialkraft zu einer Verformung des Schwingungstilgerrings 10 und damit zu einer unerwünschten, verringerten Gassackklemmung führen.

Durch das Stützglied 62 wird eine zusätzliche axiale Abstützstelle des Schwingungstilgerrings 10 geschaffen, sodass eine Verformung des Schwingungstilgerrings 10 verhindert wird und damit eine zuverlässige Klemmung des Gassackmunds 54 bei einer Auslösung des Gasgenerators 12 erhalten bleibt.

Das Stützglied 62 kann den Schwingungstilgerring 10 dabei insbesondere am Generatorträger 42 oder, wie in den Figuren 18 und 19 dargestellt, an einem Einpressbolzen 66 des Generatorträgers 42 axial abstützen.

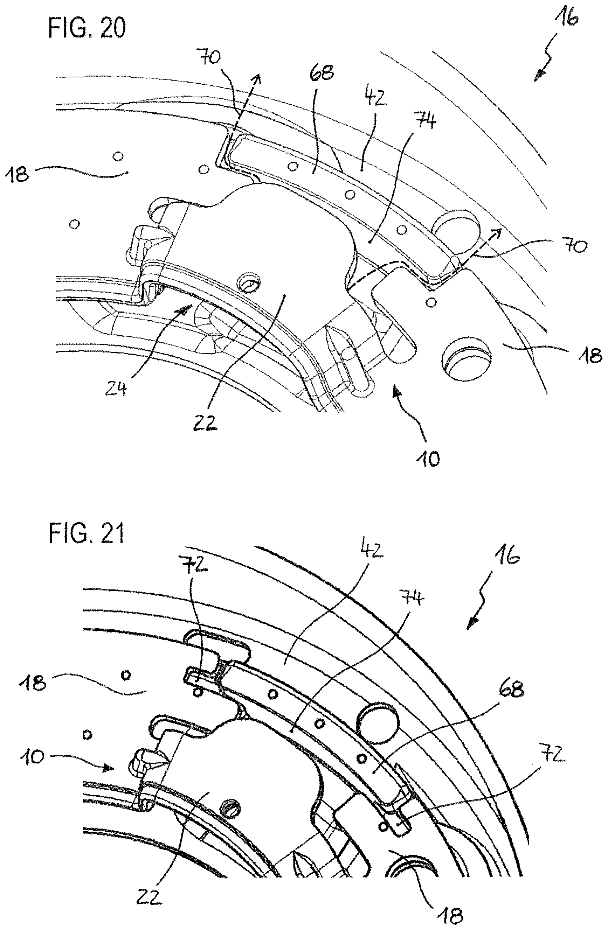

Die Figur 20 zeigt einen Ausschnitt des Gassackmoduls 16 gemäß einer weiteren Ausführungsform, bei welcher im Bereich des Tilgerabschnitts 22 radial außerhalb des Dämpfungsglieds 24 ein Wandabschnitt 68 zur Minimierung einer Gasleckage vorgesehen ist, wobei der Wandabschnitt 68 in Umfangsrichtung jeweils an einen Trägerabschnitt 18 des Schwingungstilgerrings 10 angrenzt.

Um bei einer Auslösung des Gasgenerators 12 ein Abströmen von Generatorgas nach außerhalb des Gassackmoduls 16 weiter zu reduzieren, überlappt der Trägerabschnitt 18 radial innerhalb des Wandabschnitts 68 in Umfangsrichtung mit dem Wandabschnitt 68, sodass zwischen dem Schwingungstilgerring 10 und dem Wandabschnitt 68 kein radial durchgehender Spalt existiert, sondern eine Labyrinth-Abdichtung entsteht. Obwohl zwischen dem Schwingungstilgerring 10 und dem Wandabschnitt 68 ein gewisses Spiel notwendig ist, um die Tilgerfunktion nicht zu beeinträchtigen, lässt sich auf diese Weise eine gute Gasabdichtung realisieren, weil eine in Figur 20 gestrichelt angedeutete Gasströmung 70 zweimal die Richtung wechseln muss um das Gassackmodul 16 zu verlassen.

In den Figuren 21 bis 25 ist noch eine weitere Ausführungsform des Gassackmoduls 16 dargestellt, welche im Wesentlichen der Ausführungsform gemäß Figur 20 entspricht, sodass auf die obige Beschreibung verwiesen wird.

Die Figur 21 zeigt einen Ausschnitt des Gassackmoduls 16 analog zu Figur 20. Bei einem Vergleich wird deutlich, dass der einzige Unterschied zwischen den beiden Ausführungsformen in einem zusätzlichen Schlitz 72 besteht, der gemäß Figur 21 an einem radialen Rand des Trägerabschnitts 18 ausgebildet ist und sich in Umfangsrichtung in den Trägerabschnitt 18 erstreckt. In radialer Richtung ist der Schlitz 72 so positioniert, dass er sich in der Verlängerung einer radialen Innenseite 74 des Wandabschnitts 68 befindet.

Analog zu Figur 20 wird die Gasströmung 70 an der radialen Innenseite 74 im Wesentlichen in eine Tangentialrichtung abgelenkt. Dann allerdings strömt das Gas im Unterschied zu Figur 20 größtenteils in den Schlitz 72 und wird dort verwirbelt. Aufgrund dieser Verwirbelung und den im Vergleich zu Figur 20 weniger klar vorgegebenen Strömungspfad resultiert aus diesem einfachen Schlitz 72 eine bessere Abdichtung zwischen dem Schwingungstilgerring 10 und dem Wandabschnitt 68. Dementsprechend lässt sich eine Gasleckage durch den Schlitz 72 mit geringem Aufwand weiter reduzieren.

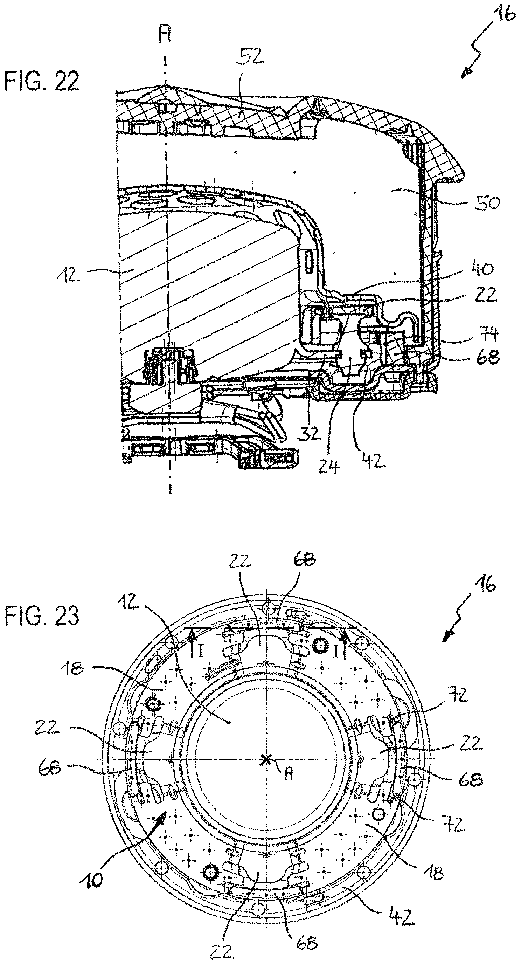

Die Figur 22 zeigt einen Schnitt durch einen Tilgerabschnitt 22 des fertig montierten Gassackmoduls 16 gemäß Figur 21. Hierbei wird deutlich, dass der Wandabschnitt 68 am Generatorträger 42 befestigt und im Bereich des Tilgerabschnitts 22 radial außerhalb des Dämpfungsglieds 24 angeordnet ist. Der Wandabschnitt 68 erstreckt sich dabei in axialer Richtung vom Generatorträger 42 bis zum Trägerabschnitt 18 des Schwingungstilgerrings 10 und verringert bei einer Auslösung des Gasgenerators 12 eine Gasleckage nach außerhalb des Gassackmoduls 16.

Vorzugsweise ist jedem Tilgerabschnitt 22 des Schwingungstilgerrings 10 genau ein Wandabschnitt 68 zugeordnet. In der dargestellten Ausführungsform des Gassackmoduls 16 weist der Schwingungstilgerring 10 gemäß Figur 23 beispielsweise vier in Umfangsrichtung gleichmäßig verteilte Tilgerabschnitte 22 auf, denen jeweils ein Wandabschnitt 68 zugeordnet ist.

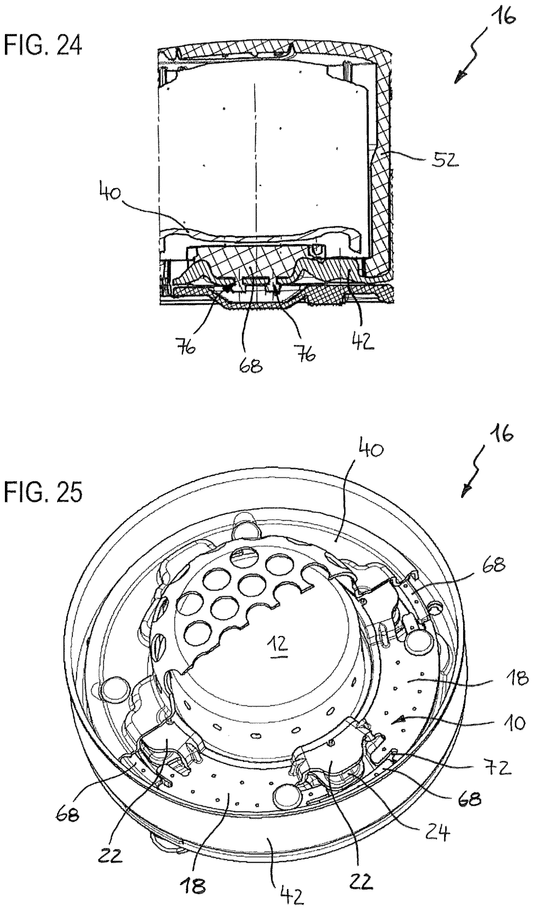

Die Figur 24 zeigt einen in Figur 23 angedeuteten, tangentialen Detailschnitt I-I durch einen Wandabschnitt 68. Es ist gut zu erkennen, dass der Wandabschnitt 68 aus einem Kunststoff, insbesondere einem elastischen Kunststoff hergestellt und an den Generatorträger 42 angespritzt ist. Konkret erstreckt sich der Kunststoff des Wandabschnitts 68 durch Öffnungen 76 des Generatorträgers 42 und hintergreift diesen rückseitig. Dies stellt hinsichtlich Fertigung und Montage eine besonders einfache Möglichkeit dar, die Wandabschnitte 68 zuverlässig am Generatorträger 42 zu befestigen, wobei alternativ natürlich auch andere Befestigungsvarianten oder eine einstückige Ausführung denkbar sind. Der Generatorträger 42 ist im dargestellten Ausführungsbeispiel aus Metall gefertigt, wobei allerdings auch eine Herstellung aus einem stabilen Kunststoff möglich wäre.

Die Figur 25 zeigt schließlich eine teilgeschnittene, perspektivische Ansicht des Gassackmoduls 16 gemäß den Figuren 21 bis 24, das bei einer Auslösung des Gasgenerators 12 eine besonders geringe Gasleckage aufweist.

## Patentansprüche

1. Gassackmodul zur Montage an einem Fahrzeuglenkrad (14), umfassend
einen Gasgenerator (12) und
einen Schwingungstilgerring zur schwingfähigen Befestigung eines Gasgenerators (12) an einem Fahrzeuglenkrad (14), mit
einer Ringachse (A),
einem Trägerabschnitt (18) zur Befestigung des Schwingungstilgerrings (10) an einem Halteelement,
einem Tilgerabschnitt (22) zur Befestigung des Gasgenerators (12) am Schwingungstilgerring (10),
wobei ein elastisches Dämpfungsglied (24) vorgesehen ist, das sich in axialer Richtung vom Tilgerabschnitt (22) zu einem freien Ende (26) hin erstreckt und zwischen dem Tilgerabschnitt (22) und dem freien Ende (26) ein Befestigungselement (28) für den Gasgenerator (12) aufweist,
wobei der Trägerabschnitt (18) eine Klemmfläche (58) für einen Gassack (50) aufweist und der Schwingungstilgerring (10) ein Zweikomponenten-Bauteil ist, mit einer elastischen ersten Komponente (44), die das Dämpfungsglied (24) bildet, sowie einer zweiten Komponente (46), die eine geringere Elastizität aufweist als die erste Komponente (44),
wobei die Klemmfläche (58) des Trägerabschnitts (18) durch die erste Komponente (44) gebildet wird und/oder genoppt ist,
**dadurch gekennzeichnet, dass** sich das elastische Dämpfungsglied (24) im montierten Zustand des Gassackmoduls (16) vom Tilgerabschnitt (22) axial in Richtung zu einer Lenkradnabe (60) des Fahrzeuglenkrads (14) erstreckt und im Bereich des Tilgerabschnitts (22) radial außerhalb des Dämpfungsglieds (24) ein Wandabschnitt (68) zur Minimierung einer Gasleckage vorgesehen ist.

2. Gassackmodul nach Anspruch 1, **dadurch gekennzeichnet, dass** der Trägerabschnitt (18) und der Tilgerabschnitt (22) in axialer Richtung voneinander beabstandet sind.

3. Gassackmodul nach wenigstens einem der vorhergehenden Ansprüche, **dadurch gekennzeichnet, dass** mehrere Trägerabschnitte (18) und mehrere Tilgerabschnitte (22) vorgesehen sind, insbesondere wobei die Trägerabschnitte (18) und die Tilgerabschnitte (22) in Umfangsrichtung abwechselnd angeordnet sind.

4. Gassackmodul nach wenigstens einem der vorhergehenden Ansprüche, **dadurch gekennzeichnet, dass** das elastische Dämpfungsglied (24) zwischen dem Tilgerabschnitt (22) und dem Befestigungselement (28) für den Gasgenerator (12) in axialer Richtung zumindest abschnittsweise einen Hohlquerschnitt aufweist.

5. Gassackmodul nach wenigstens einem der vorhergehenden Ansprüche, **dadurch gekennzeichnet, dass** der Trägerabschnitt (18) eine Befestigungseinrichtung, insbesondere eine Befestigungsöffnung (36) zur Aufnahme eines Verbindungsmittels (38) aufweist.

6. Gassackmodul nach wenigstens einem der vorhergehenden Ansprüche, **dadurch gekennzeichnet, dass** der Trägerabschnitt (18) eine Klemmfläche (58) für einen Gassack (50) aufweist, insbesondere wobei sich die Klemmfläche (58) im Wesentlichen senkrecht zur Ringachse (A) erstreckt.

7. Gassackmodul nach wenigstens einem der vorhergehenden Ansprüche, **dadurch gekennzeichnet, dass** auf einer vom Dämpfungsglied (24) abgewandten axialen Stirnseite an einem radialen Innenrand des Schwingungstilgerrings (10) eine Fase (56) zur Umlenkung eines radialen Gasstroms vorgesehen ist.

8. Gassackmodul nach wenigstens einem der vorhergehenden Ansprüche, **dadurch gekennzeichnet, dass** wenigstens ein Stützglied (62) vorgesehen ist, welches sich in axialer Richtung vom Trägerabschnitt (18) zu einem freien Stützgliedende (64) hin erstreckt, insbesondere wobei das elastische Dämpfungsglied (24) und das Stützglied (62) auf derselben axialen Seite des Schwingungstilgerrings (10) angeordnet sind.

9. Gassackmodul nach wenigstens einem der vorhergehenden Ansprüche, **dadurch gekennzeichnet, dass** im montierten Zustand des Gassackmoduls (16) der Trägerabschnitt (18) einen geringeren axialen Abstand zur Lenkradnabe (60) aufweist als der Tilgerabschnitt (22) des Schwingungstilgerrings (10).

10. Gassackmodul nach wenigstens einem der vorhergehenden Ansprüche, **dadurch gekennzeichnet, dass** ein Generatorträger (42) vorgesehen ist, wobei der Wandabschnitt (68) am Generatorträger (42) befestigt ist und sich in axialer Richtung vom Generatorträger (42) bis zum Trägerabschnitt (18) des Schwingungstilgerrings (10) erstreckt.

11. Gassackmodul nach wenigstens einem der vorhergehenden Ansprüche, **dadurch gekennzeichnet, dass** der Wandabschnitt (68) in Umfangsrichtung jeweils an einen Trägerabschnitt (18) des Schwingungstilgerrings (10) angrenzt, wobei der Trägerabschnitt (18) radial innerhalb und/oder radial außerhalb des Wandabschnitts (68) in Umfangsrichtung mit dem Wandabschnitt (68) überlappt, sodass zwischen dem Schwingungstilgerring (10) und dem Wandabschnitt (68) eine Labyrinth-Abdichtung entsteht.

## Claims

1. An airbag module for mounting on a vehicle steering wheel (14) comprising
a gas generator (12) and
a vibration absorber ring for oscillatory fastening of a gas generator (12) on a vehicle steering wheel (14), comprising
a ring axis (A),
a bearing portion (18) for fastening the vibration absorber ring (10) on a retaining element,
an absorber portion (22) for fastening the gas generator (12) on the vibration absorber ring (10),
wherein an elastic damping member (24) is provided, which extends in the axial direction from the absorber portion (22) to a free end (26) and which, between the absorber portion (22) and the free end (26), has a fastening element (28) for the gas generator (12),
wherein the bearing portion (18) has a clamping area (58) for an airbag (50) and the vibration absorber ring (10) is a two-component part comprising an elastic first component (44) forming the damping member (24) as well as a second component (46) having lower elasticity than the first component (44),
wherein the clamping area (58) of the bearing portion (18) is formed by the first component (44) and/or buried,
**characterized in that** the elastic damping member (24) in the mounted condition of the airbag module (16) extends from the absorber portion (22) axially in the direction of a steering wheel hub (60) of the vehicle steering wheel (14) and in the area of the absorber portion (22) radially outside of the damping member (24) a wall portion (68) is provided for minimizing gas leakage.

2. The airbag module according to claim 1, **characterized in that** the bearing portion (18) and the absorber portion (22) are spaced apart from each other in the axial direction.

3. The airbag module according to at least one of the preceding claims, **characterized in that** plural bearing portions (18) and plural absorber portions (22) are provided, especially wherein the bearing portions (18) and the absorber portions (22) are alternated in the circumferential direction.

4. The airbag module according to at least one of the preceding claims, **characterized in that** the elastic damping member (24) at least in portions has a hollow cross-section in the axial direction between the absorber portion (22) and the fastening element (28) for the gas generator (12).

5. The airbag module according to at least one of the preceding claims, **characterized in that** the bearing portion (18) has a fastening means, especially a fastening opening (36) for receiving a connector (38).

6. The airbag module according to at least one of the preceding claims, **characterized in that** the bearing portion (18) has a clamping area (58) for an airbag (50), especially wherein the clamping area (58) extends substantially normal to the ring axis (A).

7. The airbag module according to at least one of the preceding claims, **characterized in that** on an axial end face remote from the damping member (24) a chamfer (56) for deflecting a radial gas flow is provided at a radial inner edge of the vibration absorber ring (10).

8. The airbag module according to at least one of the preceding claims, **characterized in that** at least one supporting member (62) is provided, which extends in the axial direction from the bearing portion (18) to a free supporting member end (64), especially wherein the elastic damping member (24) and the supporting member (62) are arranged on the same axial side of the vibration absorber ring (10).

9. The airbag module according to at least one of the preceding claims, **characterized in that**, in the mounted condition of the airbag module (16), the bearing portion (18) has a lower axial distance from the steering wheel hub (60) than the absorber portion (22) of the vibration absorber ring (10).

10. The airbag module according to at least one of the preceding claims, **characterized in that** a generator support (42) is provided, wherein the wall portion (68) is fastened on the generator support (42) and extends in the axial direction from the generator support (42) to the bearing portion (18) of the vibration absorber ring (10).

11. The airbag module according to at least one of the preceding claims, **characterized in that** in the circumferential direction the wall portion (68) abuts on a respective bearing portion (18) of the vibration absorber ring (10), wherein the bearing portion (18) overlaps the wall portion (68) radially inside and/or radially outside of the wall portion (68) in the circumferential direction so that a labyrinth-type sealing is formed between the vibration absorber ring (10) and the wall portion (68).

## Revendications

1. Module airbag destiné à être monté sur un volant de direction de véhicule (14), comprenant
un générateur de gaz (12) et
un anneau amortisseur de vibrations pour la fixation oscillante d'un générateur de gaz (12) sur un volant de direction de véhicule (14), avec
un axe annulaire (A),
une section de support (18) pour la fixation de l'anneau amortisseur de vibrations (10) sur un élément de retenue,
une section d'amortissement (22) pour fixer le générateur de gaz (12) à l'anneau amortisseur de vibrations (10),
pour lequel un élément d'amortissement élastique (24) est prévu, lequel s'étend dans la direction axiale de la section d'amortissement (22) vers une extrémité libre (26) et présente entre la section d'amortissement (22) et l'extrémité libre (26) un élément de fixation (28) pour le générateur de gaz (12),
pour lequel la section de support (18) présente une surface de serrage (58) pour un coussin gonflable (50) et l'anneau amortisseur de vibrations (10) est une pièce en deux composants, avec un premier composant élastique (44) qui forme l'élément amortisseur (24), ainsi qu'un deuxième composant (46) qui présente une élasticité moindre que le premier composant (44),
pour lequel la surface de serrage (58) de la section de support (18) est formée par le premier composant (44) et/ou est munie de picots,
**caractérisé en ce que** l'élément d'amortissement élastique (24) s'étend, à l'état monté du module airbag (16), de la section d'amortissement (22) axialement en direction d'un moyeu de volant (60) du volant de direction (14) du véhicule et, dans la zone de la section d'amortissement (22), radialement à l'extérieur de l'élément d'amortissement élastique (24), une section de paroi (68) est prévue pour minimiser une fuite de gaz.

2. Module airbag selon la revendication 1, **caractérisé en ce que** la section de support (18) et la section d'amortissement (22) sont espacées l'une de l'autre dans la direction axiale.

3. Module airbag selon au moins l'une des revendications précédentes, **caractérisé en ce qu'**il est prévu plusieurs sections de support (18) et plusieurs sections d'amortissement (22), en particulier pour lequel les sections de support (18) et les sections d'amortissement (22) sont disposées en alternance dans la direction périphérique.

4. Module airbag selon au moins l'une des revendications précédentes, **caractérisé en ce que** l'élément d'amortissement élastique (24) présente, entre la section d'amortissement (22) et l'élément de fixation (28) pour le générateur de gaz (12), une section transversale creuse au moins par sections dans la direction axiale.

5. Module airbag selon au moins l'une des revendications précédentes, **caractérisé en ce que** la section de support (18) présente un dispositif de fixation, en particulier une ouverture de fixation (36) destinée à recevoir un moyen de liaison (38).

6. Module airbag selon au moins l'une des revendications précédentes, **caractérisé en ce que** la section de support (18) présente une surface de serrage (58) pour un coussin gonflable (50), en particulier pour lequel la surface de serrage (58) s'étend essentiellement perpendiculairement à l'axe annulaire (A).

7. Module airbag selon au moins l'une des revendications précédentes, **caractérisé en ce que** sur une face frontale axiale opposée à l'élément d'amortissement élastique (24), sur un bord intérieur radial de l'anneau amortisseur de vibrations (10), est prévu un chanfrein (56) pour dévier un flux de gaz radial.

8. Module airbag selon au moins l'une des revendications précédentes, **caractérisé en ce qu'**il est prévu au moins un élément d'appui (62), lequel s'étend dans la direction axiale de la section de support (18) vers une extrémité d'élément d'appui libre (64), en particulier pour lequel l'élément d'amortissement élastique (24) et l'élément d'appui (62) sont disposés sur le même côté axial de l'anneau amortisseur de vibrations (10).

9. Module airbag selon au moins l'une des revendications précédentes, **caractérisé en ce qu'**à l'état monté du module airbag (16), la section de support (18) présente une distance axiale plus faible par rapport au moyeu du volant de direction (60) que la section d'amortissement (22) de l'anneau amortisseur des vibrations (10).

10. Module airbag selon au moins l'une des revendications précédentes, **caractérisé en ce qu'**il est prévu un support de générateur (42), pour lequel la section de paroi (68) est fixée au support de générateur (42) et s'étend dans la direction axiale du support de générateur (42) jusqu'à la section de support (18) de l'anneau amortisseur de vibrations (10).

11. Module airbag selon au moins l'une des revendications précédentes, **caractérisé en ce que** la section de paroi (68) est adjacente dans la direction périphérique à une section de support (18) de l'anneau amortisseur de vibrations (10), pour lequel la section de support (18) chevauche radialement à l'intérieur et/ou radialement à l'extérieur de la section de paroi (68) dans la direction périphérique avec la section de paroi (68), de sorte qu'il se forme entre l'anneau amortisseur de vibrations (10) et la section de paroi (68) un joint d'étanchéité en labyrinthe.
